# DEMANDE DE BREVET EUROPEEN

(11) **EP 1 696 256 A1**
(43) Date de publication de la demande: **30.08.2006**
(21) Numéro de dépôt: 06290117.8
(22) Date de dépôt: 18.01.2006
(51) Int. Cl.: G02B 23/08, G02B 23/16

(54) **Dispositif d'observation à épiscope escamotable**

(30) Priorité: 24.02.2005 FR 0501857
(71) Demandeur: GIAT Industries, 78000 Versailles (FR)
(72) Inventeur: Germenot, Olivier, 78000 Versailles (FR); Timmer, Bernard, 78700 Conflans Saint-Honorine (FR)
(74) Mandataire: Célanie, Christian

(57) **Abrégé**

L'invention concerne un dispositif d'observation (1) à travers la paroi d'une enceinte de protection, telle un véhicule militaire, à l'aide d'un épiscope (2) dont la partie inférieure est en saillie dans ladite enceinte, caractérisé en ce qu'il comprend un support (3) relié à l'enceinte (18) de manière étanche délimitant un logement dans lequel est monté l'épiscope (2) par l'intermédiaire de tourillons articulés par rapport audit support, la partie inférieure de l'épiscope (2) étant escamotable en s'effaçant dans le logement.

## Description

Le secteur technique de la présente invention est celui des dispositifs d'observation à travers la paroi d'une enceinte de protection à l'aide d'un épiscope, c'est-à-dire d'un instrument optique permettant d'observer à travers une paroi derrière laquelle l'opérateur est protégé.

Dans un véhicule militaire, les opérateurs sont amenés à utiliser des épiscopes qui sont généralement placés dans leur champ visuel proche. Lorsque ces opérateurs passent à une vision sur écran par exemple, l'épiscope constitue une gène sur le plan ergonomique et son escamotage devient un impératif.

On a déjà proposé des dispositifs d'escamotage d'un épiscope afin de tenter d'éviter une interférence avec la tête de l'opérateur dans l'enceinte lorsque cet épiscope n'est pas utilisé. Ainsi, le brevet GB-2089519 prévoit explicitement un montage d'un épiscope par l'intermédiaire d'une rotule articulée par rapport à son support suivant trois axes. Toutefois, le montage proposé est complexe. On prévoit en particulier deux branches, l'une externe intégrant un bloc optique supérieur et l'autre interne intégrant un bloc optique inférieur. Les deux blocs sont séparés l'un de l'autre et la partie externe est mal protégée contre les agressions balistiques, ce qui constitue un inconvénient majeur. De plus, le fait de prévoir un montage suivant trois axes ne permet pas de minimiser l'encombrement interne qui reste donc important et les possibilités d'interférence avec l'opérateur ne sont pas négligeables.

On peut encore citer le brevet FR-2769378 qui propose un épiscope dont la partie extérieure reste fixe et la partie interne mobile. Toutefois, il s'agit d'un épiscope tronqué dont la partie interne est constituée principalement par un miroir et dont la partie externe est mal protégée contre les agressions.

Le but de la présente invention est de fournir un épiscope escamotable pour minimiser dans de fortes proportions son encombrement afin d'éviter de constituer un obstacle susceptible de perturber son champ visuel et d'entraver les déplacements de l'opérateur en particulier lors des manoeuvres d'évacuation.

L'invention a donc pour objet un dispositif d'observation à travers la paroi d'une enceinte de protection, tel un véhicule militaire, à l'aide d'un épiscope dont la partie inférieure est en saillie dans ladite enceinte, caractérisé en ce qu'il comprend un support relié à l'enceinte de manière étanche et délimitant un logement dans lequel est monté l'épiscope par l'intermédiaire de tourillons articulés par rapport audit support, la partie inférieure de l'épiscope étant escamotable en s'effaçant dans le logement.

Selon une réalisation, le support se présente sous la forme d'un boîtier ouvert délimité par deux joues latérales réunies par des entretoises antérieure et postérieure.

Selon une autre réalisation, le dispositif comporte un volet articulé solidaire de la partie externe de l'épiscope et coulissant par rapport au support, le volet pouvant se présenter sous la forme d'une plaque coulissant dans deux rainures en vis-à-vis pratiquées dans les joues du support et fermant l'espace compris entre l'épiscope et ledit support.

Selon une autre réalisation, l'épiscope est muni d'un renflement dans sa partie médiane sur lequel sont montés des tourillons, ledit renflement étant en appui sur les bords du logement.

Avantageusement, un joint d'étanchéité est disposé au dans une rainure pratiquée dans les joues et au niveau des bords des entretoises en appui constant contre le renflement de façon à assurer l'étanchéité, le joint étant du type rectangulaire.

Le dispositif peut comporter un soufflet de protection fixé sur le support et sur la partie externe de l'épiscope.

Le dispositif peut comprendre un moyen de motorisation solidaire du support et actionnant un tourillon du renflement, le moyen d'entraînement pouvant être constitué par un moteur ou un vérin.

Un tout premier avantage de l'invention réside dans le fait que l'encombrement est réduit pour l'opérateur, ce qui facilite l'accès à son poste d'observation.

Un autre avantage réside dans le fait que la partie inférieure de l'épiscope est totalement escamotée à l'intérieur du support.

Un autre avantage de l'invention réside dans l'ajustement variable de la position de l'épiscope par rapport au support.

Un autre avantage encore réside dans la réalisation compacte de l'ensemble épiscope-support constituant un élément facilement intégrable sur une enceinte.

Un autre avantage encore de l'invention réside dans la protection externe renforcée de l'épiscope.

D'autres caractéristiques, détails et avantages de l'invention apparaîtront plus clairement à la lecture du complément de description qui va suivre de modes de réalisation donnés à titre d'exemple en relation avec des dessins sur lesquels :
- la figure 1 représente une vue éclatée du dispositif selon l'invention,
- la figure 2 est une coupe schématique montrant l'implantation de l'épiscope dans son support,
- les figures 3 et 4 représentent des positions intermédiaires de l'épiscope,
- la figure 5 montre une vue en perspective du dispositif tronqué,
- la figure 6 est une vue en perspective du joint, et
- les figures 7 et 8 montrent des exemples de réalisation des moyens d'entraînement de la motorisation.

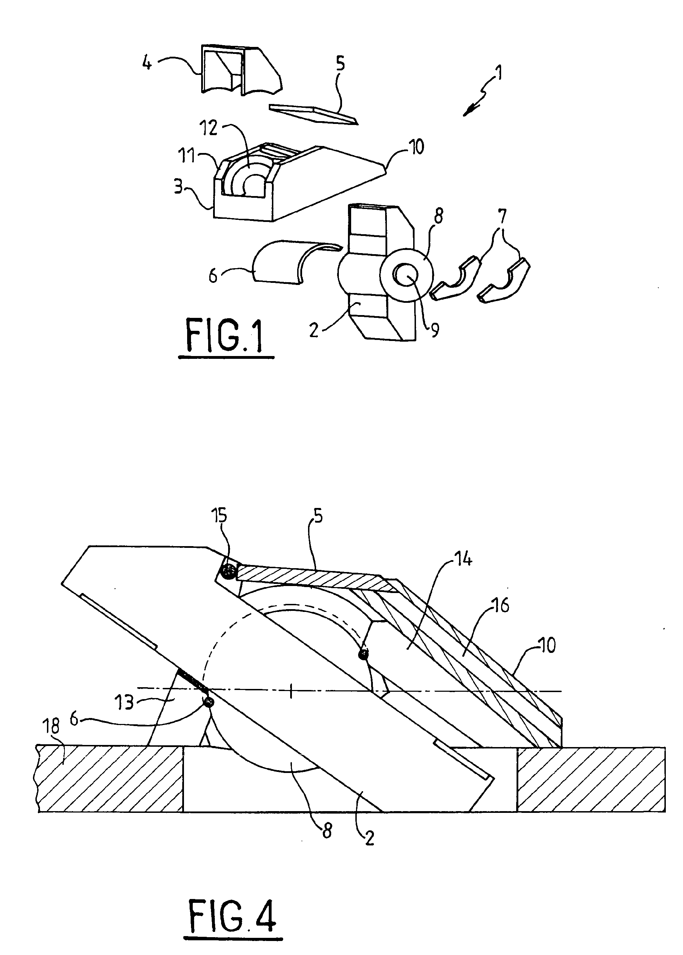

Sur la figure 1, on a représenté une vue éclatée d'un dispositif d'observation 1 constituant selon l'invention un moyen d'observation à travers une paroi d'une enceinte dans laquelle est enfermé un opérateur. Ce dispositif comprend un épiscope proprement dit 2, un support 3, un capotage supérieur 4, un capotage arrière 5, un joint 6 et des paliers 7. L'épiscope proprement dit 2 est de réalisation tout à fait classique en ce qu'il comprend des blocs de verre enfermés dans un boîtier. Ce boîtier est muni d'un renflement 8 cylindrique dont le rôle sera expliqué ci-après. Ce renflement est prolongé de part et d'autre par des tourillons 9 dont un seul est visible sur la figure. Le support 3 se présente sous la forme de deux joues latérales 10 et 11 délimitant entre elles un logement 12, et réunies ensembles par des entretoises de façon à constituer un ensemble rigide. L'épiscope 2 est disposé dans ce logement 12 comme cela va être expliqué plus loin. On voit que la structure proposée permet de mettre en oeuvre un épiscope classique sans modifications notables de sa structure puisqu'il suffit de rapporter le renflement 8 de part et d'autre de son boîtier. On comprend qu'une telle réalisation assure un gain notable dans le coût de fabrication.

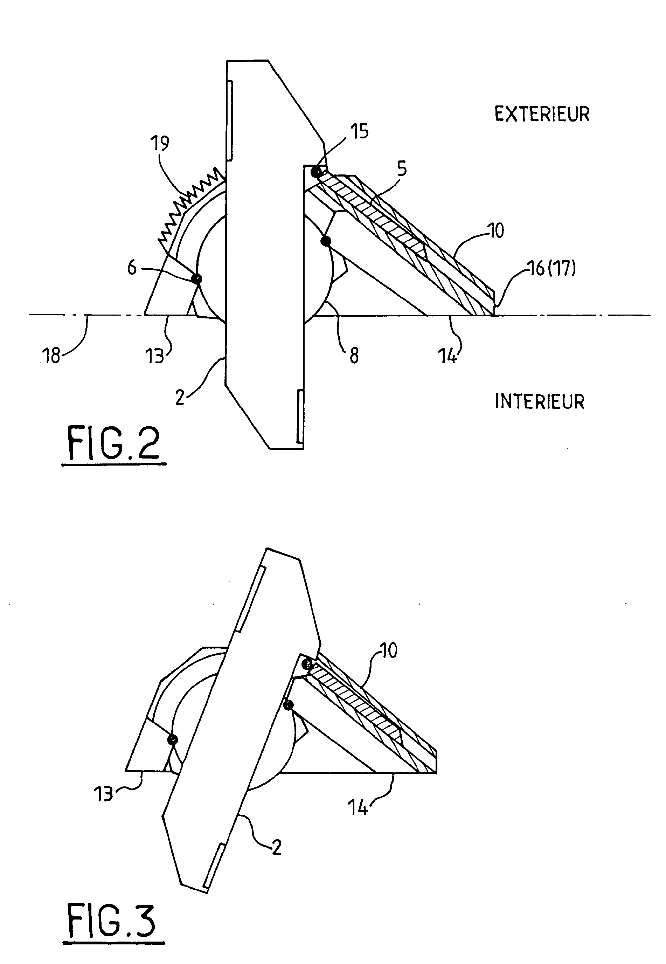

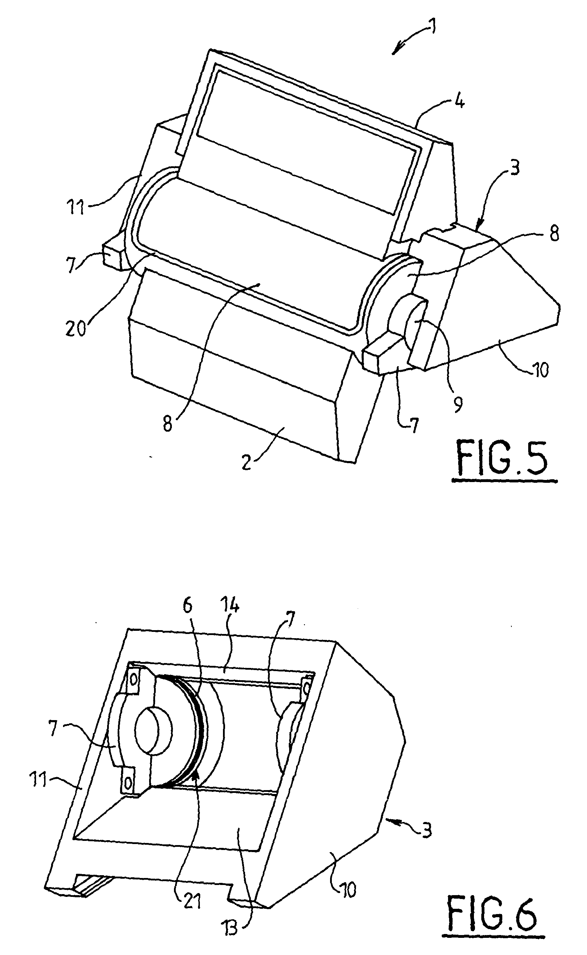

Sur la figure 2, on a représenté en coupe un épiscope assemblé. Il va de soi que le support 3 peut être relié de façon étanche à l'enceinte de protection 18, par tout moyen, par exemple par soudure, au niveau de ses joues latérales 10 et 11 et des entretoises antérieure 13 et postérieure 14 les reliant, de façon à donner accès à l'intérieur de ladite enceinte. Sur la figure, l'enceinte 18 est schématisée sous la forme d'une paroi qui peut être une partie fixe ou mobile de cette enceinte. Par partie mobile, on entend un ouvrant sur lequel l'épiscope serait implanté. Sur la figure, on voit que l'épiscope 2 est positionné au niveau des bords des entretoises 13 et 14 par l'intermédiaire du renflement 8 qui vient s'appliquer sur le joint 6. Les bords de ce joint sont insérés dans des logements prévus dans les parois latérales 10 et 11 et les entretoises 13 et 14 comme cela sera expliqué en relation avec la figure 6. Ce joint 6 permet de rendre étanche le montage de l'épiscope 2 dans le logement 12. Le capotage arrière 5 se présente sous la forme d'une plaque rigide reliée de manière articulée à l'épiscope 2 à l'aide d'un axe 15 en étant coulissante à l'intérieur de deux rainures 16 et 17 pratiquées dans les joues 10 et 11 dont une seule est visible sur la figure. Ainsi, la plaque rigide 5 assure une protection balistique en combinaison avec le capotage 4 contre les impacts de projectiles dirigés vers l'épiscope. L'étanchéité de l'épiscope est complétée par un soufflet 19 fixé sur l'entretoise antérieure 13 et sur l'épiscope 2. Ce soufflet permet d'éviter l'entrée de projections risquant de rayer la surface d'étanchéité et de liquide lors des phases de décontamination. Ce soufflet protège donc la partie de l'épiscope sur laquelle frotte le joint d'étanchéité.

On notera que lorsque l'épiscope 2 est monté sur l'enceinte 18, il présente une partie extérieure en dehors de l'enceinte et une partie intérieure dans l'enceinte. Sur la figure 2, la partie intérieure de l'épiscope est complètement en saillie dans l'enceinte 18.

Ainsi qu'il ressort de la description ci-dessus, l'épiscope 2 peut occuper diverses positions angulaires par rapport au support afin de permettre l'observation par un opérateur occupant l'enceinte et son escamotage total, la figure 2 représentant la position courante d'utilisation.

La figure 3 représente une position finale dans laquelle l'épiscope 2 est en butée contre l'entretoise postérieure 14. Dans cette position, l'épiscope permet une observation en élévation, position particulièrement appréciable au cours d'un combat en zone urbaine. Le champ visuel est augmenté en site dans des proportions supérieures à celui d'un épiscope classique.

La figure 4 illustre l'autre position finale dans laquelle l'épiscope 2 est en butée contre l'entretoise antérieure 13. C'est la position d'escamotage de l'épiscope dans laquelle l'opérateur peut librement se déplacer dans l'enceinte sans que cet épiscope constitue un obstacle dans son champ visuel ou à sa progression. Dans cette position, on voit que le renflement 8 est protégé par la plaque 5 qui est entraînée par l'épiscope 2 au cours de son mouvement de rotation et que l'épiscope est entièrement engagé dans le logement 12. Ainsi, l'épiscope est protégé vis-à-vis d'une agression balistique puisque cette plaque vient fermer l'ouverture 12 du support. Il en est de même de la partie avant de l'épiscope puisque le bloc de verre n'est plus directement face à l'agression et peut être également protéger par une plaque supplémentaire venant contre le bloc optique. On voit encore que l'épiscope 2 est entièrement effacé par rapport à la paroi de l'enceinte 18 en offrant une ergonomie tout à fait avantageuse du poste d'observation. La partie intérieure de l'épiscope 2 est donc complètement insérée dans l'ouverture 12 et n'offre aucun point de butée.

La figure 5 représente une vue de face du dispositif d'observation 1 dont l'épiscope 2 proprement dit est intégré dans le support 3, en étant coiffé par le capotage supérieur 4. Sur cette figure, on voit que le renflement 8 constitue une surface de contact avec le joint 6 dont on voit la trace 20 sur ledit renflement. L'épiscope est maintenu dans le logement 12 entre les joues 10 et 11 et les paliers 7.

Sur la figure 6, on a représenté l'insertion du joint 6 dans une rainure 21 de la joue 11 et dans des rainures pratiquées au niveau des bords des entretoises 13 et 14. Bien entendu, ce joints 6 est monté à force dans ces rainures et éventuellement collé.

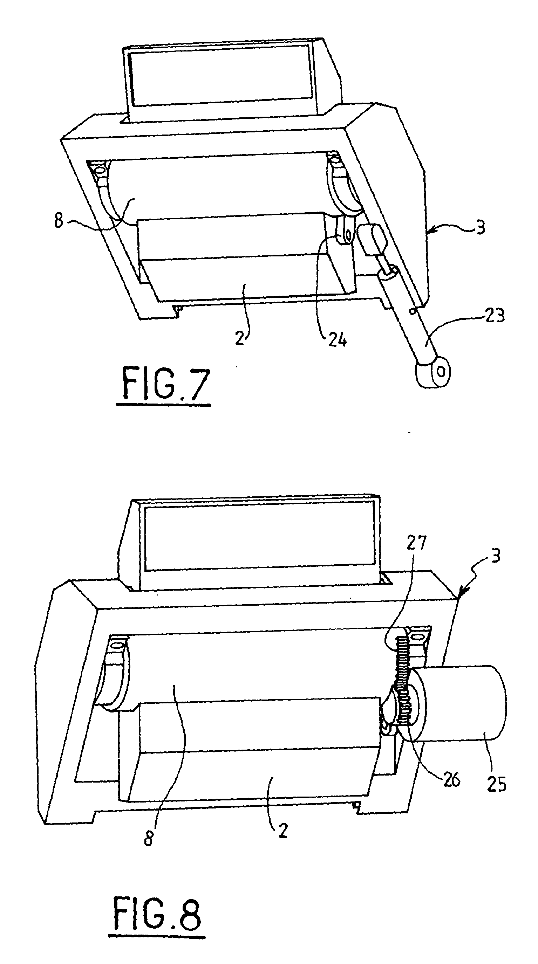

Sur les figures 7 et 8, on a représenté l'épiscope 2 maintenu par les paliers 7 permettant sa fixation sur le support 3 et équipé de moyens d'entraînement motorisé. Sur la figure 7, ces moyens d'entraînement sont constitués par un vérin 23 relié à un bras 24 fixé à un tourillon du renflement 8. Bien entendu, la course de ce vérin est calculée de façon à amener l'épiscope 2 dans les deux positions finales représentées sur les figures 4 et 5. Sur la figure 8, le moyen d'entraînement est constitué d'un moteur 25 fixé sur le support 3 muni d'un pignon 26 en prise sur un secteur denté 27 formé sur le renflement 8 de l'épiscope 2. Bien entendu, l'arc de cercle délimité par le secteur denté 27 est prévu pour amener l'épiscope 2 dans les deux positions finales représentées sur les figures 4 et 5. Les deux moyens d'entraînement décrits assurent donc la motorisation de la rotation de l'épiscope 2 et permettent ainsi à l'opérateur de commander la position de l'épiscope à l'aide d'une commande. On assure alors un pilotage automatisé des épiscopes de ce type particulièrement intéressant en cas de menace car l'escamotage préserve la fonction d'observation.

## Revendications

1. Dispositif d'observation (1) à travers la paroi d'une enceinte de protection, tel un véhicule militaire, à l'aide d'un épiscope (3) dont la partie inférieure est en saillie dans ladite enceinte, **caractérisé en ce qu'**il comprend un support (3) relié à l'enceinte de manière étanche et délimitant un logement (12) dans lequel est monté l'épiscope (2) par l'intermédiaire de tourillons (9) articulés par rapport audit support, la partie inférieure de l'épiscope (2) étant escamotable en s'effaçant dans le logement (12).

2. Dispositif d'observation selon la revendication 1, **caractérisé en ce que** le support (3) se présente sous la forme d'un boîtier ouvert délimité par deux joues latérales (10, 11) réunies par des entretoises antérieure (13) et postérieure (14).

3. Dispositif d'observation selon la revendication 2, **caractérisé en ce qu'**il comporte un volet articulé (5) solidaire de la partie externe de l'épiscope (2) et coulissant par rapport au support (3).

4. Dispositif d'observation selon la revendication 3, **caractérisé en ce que** le volet (5) se présente sous la forme d'une plaque coulissant dans deux rainures (16, 17) en vis-à-vis pratiquées dans les joues du support (3) et fermant l'espace compris entre l'épiscope et ledit support.

5. Dispositif d'observation selon l'une quelconque des revendications précédentes, **caractérisé en ce que** l'épiscope (2) est muni d'un renflement (8) dans sa partie médiane sur lequel sont montés des tourillons (9), ledit renflement étant en appui sur les bords du logement (12).

6. Dispositif d'observation selon la revendication 5, **caractérisé en ce qu'**un joint d'étanchéité (6) est disposé au dans une rainure (21) pratiqué dans les joues (10, 11) et au niveau des bords des entretoises (13, 14) en appui constant contre le renflement (8) de façon à assurer l'étanchéité.

7. Dispositif d'observation selon la revendication 6, **caractérisé en ce que** le joint (6) est du type rectangulaire.

8. Dispositif d'observation selon l'une quelconque des revendications précédentes, **caractérisé en ce qu'**il comporte un soufflet (19) de protection fixé sur le support (3) et sur la partie externe de l'épiscope (2).

9. Dispositif d'observation selon l'une quelconque des revendications précédentes, **caractérisé en ce qu'**il comprend un moyen de motorisation (23, 24 ; 25, 27) solidaire du support et actionnant un tourillon du renflement (8).

10. Dispositif d'observation selon la revendication 9, **caractérisé en ce que** le moyen d'entraînement est constitué par un moteur ou un vérin.
